Europäisches Patentamt

European Patent Office

Office européen des brevets

(11) Publication number: **0 032 619**
A2

(12) # EUROPEAN PATENT APPLICATION

(21) Application number: 80304525.1

(51) Int. Cl.³: **B 42 D 5/02, B 42 D 15/00**

(22) Date of filing: 15.12.80

(30) Priority: 20.12.79 GB 7943988

(43) Date of publication of application: 29.07.81
Bulletin 81/30

(84) Designated Contracting States: **AT BE CH DE FR GB IT LI LU NL SE**

(71) Applicant: Moore Business Forms, Inc., 300 Lang Boulevard, Grand Island, New York 14072 (US)

(72) Inventor: Lukis, Lawrence Joseph, 3, Rous Road, Buckhurst Hill Essex (GB)
Inventor: Duhig, Gerard Peter, 24, Spruce Hills Road, Walthamstow London E17 (GB)

(74) Representative: Townsend, Derek Thomas, Moore Research Centre Station Approach, Waltham Cross Herts EN8 7ND (GB)

(54) Improvements in or relating to business forms.

(57) This invention is concerned with a business form for use with character recognition apparatus. The form has at least one form length which is to receive handwriting which is recognised by the character recognition apparatus and has location means in the form length to enable the form to be fed into the apparatus and located at a predetermined location in the apparatus and has co-ordinate graduation printing areas to define location and to receive respective predetermined items of data made up of handwritten characters, the position of the graduation printing areas representing different kinds of data and having a predetermined co-ordinate relationship with reference to the location means to ensure that the printing areas are located in required relationship with reference to co-ordinate recognising apparatus in the handwriting recognition apparatus whereby when handwriting is applied to a graduation printing area on a form length it may be recognised and by virtue of the position of the area of the handwriting data may be processed.

ACTORUM AG

This invention has reference to business forms stationery and has particular reference to business forms stationery for use in conjuntion with a character recognition device used for example in conjunction with a writing machine for example with an autographic register.

Writing machines have been marketed for many years and these have included autographic registers. The autographic registers often comprise a casing including a compartment to receive a pack of folded interleaved continuous stationery webs and means to feed the continuous stationery web through the autographic register. The continuous stationery web consists of an uppermost web and one or more underlying copy record webs. Copy material such as for example carbon paper is interleaved between the upper most web and underlying copy record web or webs in order that data applied to the uppermost web can be re-produced on the underlying record web or webs. The webs are fed over a writing plate whereat the data is written by hand on the webs such data can record a business transaction but may record other data. When data has been recorded on the webs a handle at one side of the machine is operated whereby one form length of the web is fed out of the register and the underlying part or parts are fed into a filing compartment where the webs are filed and refolded and stored.

Portable autographic registers have also been marketed. Generally these portable registers comprise a compartment in which the unused forms are stored and a writing plate. In such portable registers the continuous stationery webs are pulled by hand out of the storage compartment by hand by the operator over the writing plate and the individual form lengths of the business form continuous web are located in position by means for example a pair of locating pins which engage with locating apertures at the leading end of each form length of the autographic register business form. One example of portable autographic register is described in British Patent specification No 1293677.

It has also been proposed to provide a character recognition device for automatically recognising characters as they are written. Thus in the specification of British Patent No 863431 there is described apparatus for recording that a hand written character had been written on a supporting surface, and an electrical circuit to be activated on movement of a writing instrument in writing the character and means activated by the circuit for recording the written character. This apparatus may be incorporated in an autographic register or other apparatus for receiving hand writing.

The specification of British Patent No 1310683 describes apparatus for obtaining signals representative of the co-ordinates of a point including a sheet of resistive material and an electric resistive member normally held out of contact with one or another but capable of making temporary contact on application for example of a writing implement and in which change over means are provided to pass a current through the material and number in alternative directions at right angles to one another to derive signals representative of the co-ordinates of the point.

It is an object of the present invention to provide an improved business form capable of being associated with a writing machine in such a way that the characters hand written on the business forms may be recognised and processed.

According to one aspect of the present invention a business form for use in apparatus to receive and to recognise hand writing data comprises at least one form length of a business form, the business form having location means in the form length to enable the form to be fed within the apparatus and halted at a predetermined location in the apparatus, and co-ordinate graduation printing

— 4 —

areas to define location to receive respective predetermined items of data made up of handwritten characters the position of the graduation printing areas representing different kinds of data and having a predetermined co-ordinate relationship with reference to the location means to ensure that the printing areas are located in the required relationship with reference to the co-ordinate recognising apparatus in the hand writing recognition apparatus whereby when handwriting is applied to a graduation printing area used on a form length the area may be recognised and by virtue of the position of the area the handwriting data may be processed.

According to another aspect of the present invention a handwriting data processing system comprises apparatus to receive and to recognise handwriting data and a business forms stationery for use with such apparatus wherein the business form has location means to locate the form with reference to the apparatus and co-ordinate graduation areas to define locations representative of predetermined data and to receive items of data made up of handwritten characters and wherein the apparatus to receive and recognise handwriting has a location mechanism to co-operate with the location means on the business form to locate the business form in the apparatus and has mechanism to co-operate with the co-ordinate graduation areas on the business form by virtue of the selected co-ordinate graduation area of the business form to recognise the co-ordinate graduation printing area, and by virtue of the position of the area to process the handwriting data.

A business form and apparatus for use with such business form in accordance with the present invention will now be described by way of example with reference to the accompanying drawings wherein:

Fig. 1 is a perspective view of a portable register;

Fig. 2 is a sectional view of a portable register;

Fig. 3 is a view of part of a continuous stationery business form;

Fig. 4 is a diagrammetic view of a continuous stationery business form similar to that shown in Fig. 2 in association with a character recognition; writing pad in an autographic register

Fig. 5 is a sectional view through a writing pad;

Fig. 6 is a plan view of one of the sheets of a writing pad;

0032619

— ⋲ —

Fig. 7 is a circuit block diagram;

Fig. 8 is a representation of signals and

Figs. 9 and 10 are further block diagrams.

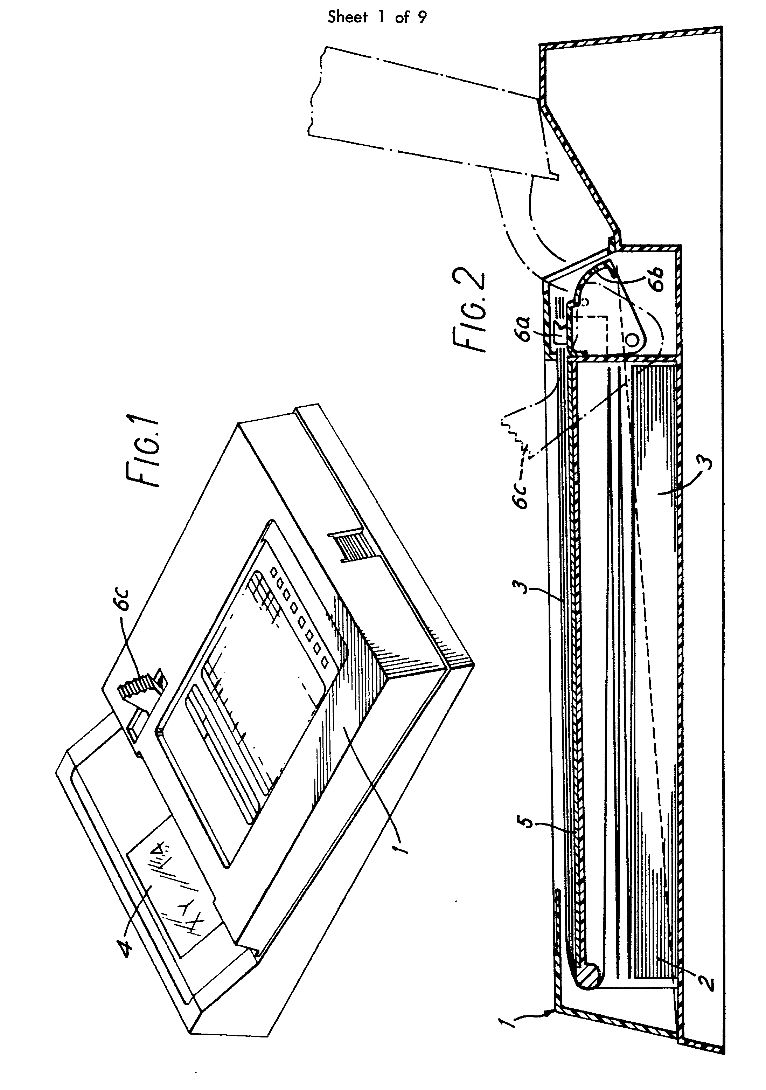

Referring to Figs 1 and 2 of the drawings there is shown a portable autographic register 1 having a filing compartment 2 for housing a pack of interleaved continuous autographic register business forms webs 3.   The webs are fed from the filing compartment 2 to a writing pad 5 by feed means 6.   The feed means 6 comprises a pair of feed pins 6a which engage in a pair of apertures 12 adjacent to the leading end of respective form lengths of the continuous webs 3.   The feed pins are mounted on a pivotal housing 6b which includes an operating lever 6c which projects through the casing of the register 1. Operation of the lever 6c serves to pull the webs through the register a sufficient distance so that the leading part of the leading form length of the web projects through an aperture in the register a sufficient distance so that the leading part may be gripped by the operator and the web pulled through the register manually.   The web is pulled through the register until the apertures 12 in the next form length engage the pins 6a when the feeding of the web is halted.   A display unit 4 is positioned at the outfeed end of the register to display characters recognised by the recognition apparatus associated with the register and to display instructions to the register operator.

A character recognition pad is located on the writing pad 5 and comprises a pair of sheets one having a resistive coating and the other being of conducting material. The sheets are normally separated from one another and capable of making temporary contact the one with the other to create an electrical circuit including the two sheets. The writing pad 5 is so arranged that by virtue of the contact made between the two sheets a value of the resistance of a circuit through the sheet can be made and hence the position of the point of contact between the two sheets can be determined. The pad may conveniently be of the kind described in the specification of our co pending application for Patent No 7943987. Associated with the writing pad 5 is a voltage measuring means associated with a series of character recognition circuits which are programmed to serve to recognise characters written on the web 3. The pad 5 is connected in an electrical circuit with character recognition processing circuits to be hereinafter described.

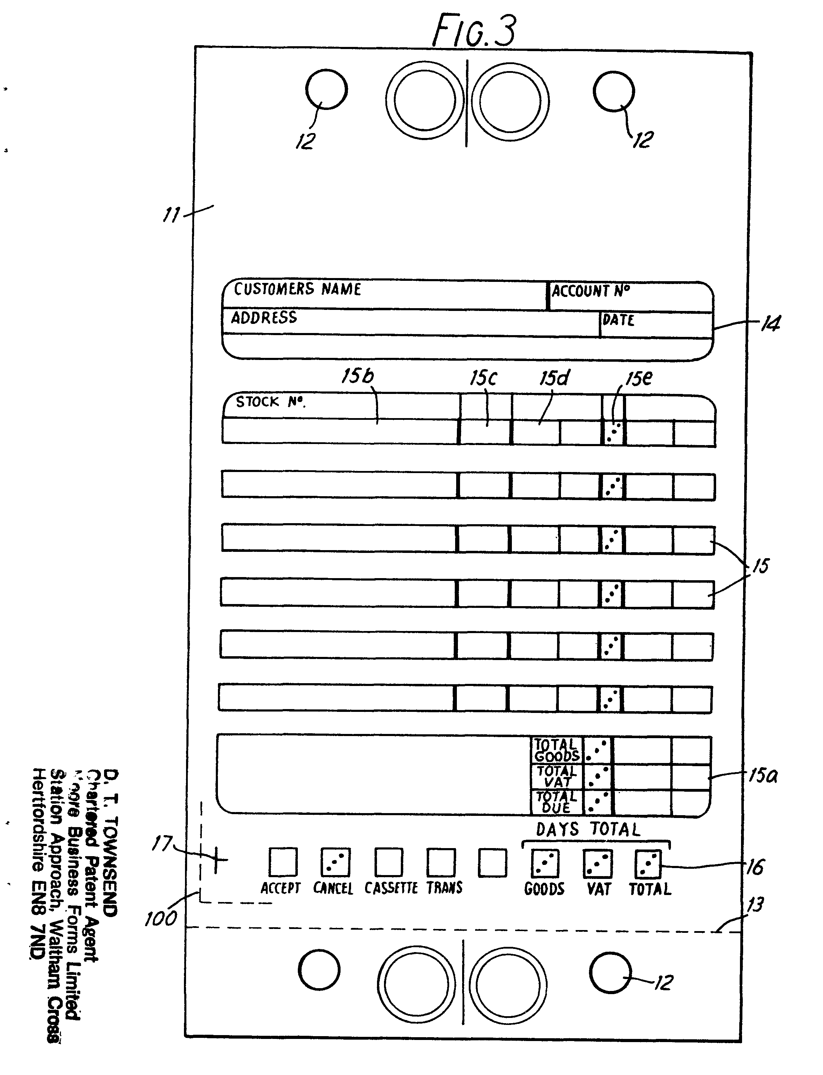

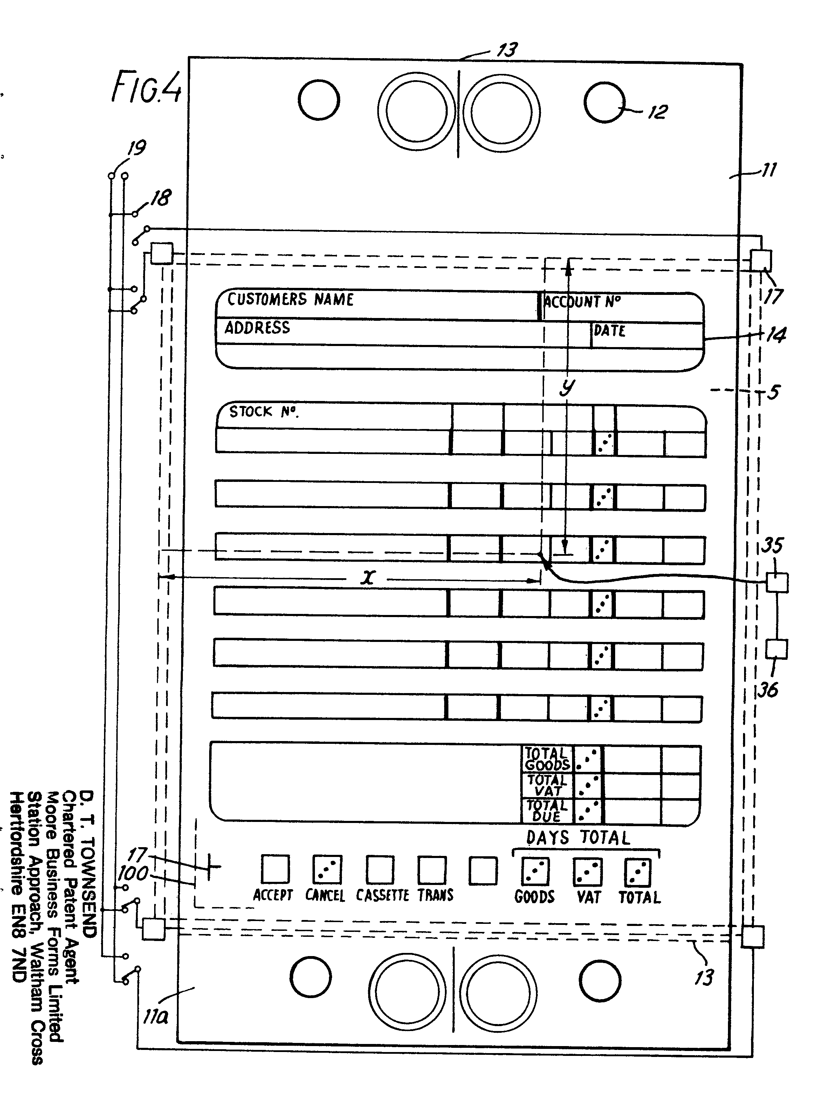

Referring to Figs 3 and 4 of the drawings there is shown a form length 11 of a continuous stationery business form with the leading part 13 of the following form length 11a divided fromthe form length 11 by a line of tear off perforations.   The business form is made up of several similar interleaved parts only one of which is shown in Figs 3 and 4 but are shown diagrammatically in Fig 2.   Each web of the business form is divided into form lengths and each form length has a pair of register apertures 12 adjacent its leading edge 13.   The business form is fed out of the autographic register by means of feed pins which are operated by manual operation of a handle and by pulling the webs.

Operation of the portable autographic register is more fully described in British Patent Specification No 1293677.


Each form length is of the same construction as the other form length and each form length is divided into predetermined writing areas 14, 15, 16.   As shown the area 14 is an address area to receive details of a customers name, address, account number and the date and the area 15 is divided into several seperate areas 15a, 15b, 15c etc each of which is to receive details of a sales transaction for example to receive details of a stock No. or description and details of quantity unit price and total price of a commodity or commodities.   An additional sub area 15a is to receive any special instructions as may be necessary to record together with an area to receive details of the total value of the whole transaction together with other miscellaneous information (Value Added Tax etc) A still further area 16 is to receive instructions related to the operation of the register. As shown these instructions include an accept instruction, a cancel instruction, and a signal related to a days total instruction in order that the total goods sold in a day, the total of Value Added Tax due in a days trading and the total value of cash generated may be indicated.

On the left hand side of the area 16 is a graduation mark 17 consisting of a vertical line and a horizontal line which abuts the vertical line at its centre point.   This graduation mark 17 co-operates with a co-ordinated position recognising apparatus to define the position of the graduation mark (to which a marking pressure is applied by a pencil or other writing implement), so that the position of the mark with respect to the writing pad 10 may be determined.   The co-ordinated position recognising apparatus will be hereinafter described.

Each business form length can be regarded as divided into one thousand units of depth and width (equivalent to 1024 ($2^{10}$) units of length less 12 units at each of its ends and sides) along its length and its width.   Thus each point on the writing area of the form, that is the area containing the areas can be regarded as having co-ordinates with an x value representing a width position and a y value representing a depth position.   The zero position for both the x and y values is illustrated diagrammatically at the intersection of the two dotted lines 100 – on Fig 3.   Thus the areas 14 relating to a customers name may be regarded as having an x value of between 20 and 750 and a y value of between 800 and 850.   Similarly the graduation mark 17 may be regarded as having an x value of 10 and a y value of 15.

It is arranged that the character recognition pad is positioned in spaced relationship with the feeding pins 6a in the register the apertures on the business form are arranged in a predetermined relationship with the areas 14, 15, and 16 on each form length of business forms. Thus when a form length is halted by the apertures coming into engagement with the feed pins 6a the respective areas       14, 15, 16, and 17 on the business form are arranged to overlie respective predetermined positions on the character recognition pad 5.   When the form length is located in the predetermined halted position in relation to the pad 5  and the pressure is applied to the form to make a mark which is for example part of a character in a selected one of the areas 14, 15, 16, and 17 to make an electrical contact between the two sheets of the character recognition pad 5  an electric circuit is made through the two sheets.   Thus as shown in Fig  4  the continuous web 3 is arranged in predetermined relationship with the apertures 12 which are aligned with the feed pins 6a in the autographic register.   The feed pins 6a are arranged in predetermined relationship with the character recognition pad 5.   The pad comprises a pair of spaced apart sheets and the top sheet is connected by the electrodes to a respective appropiate switch 18 and to an electric supply 19.

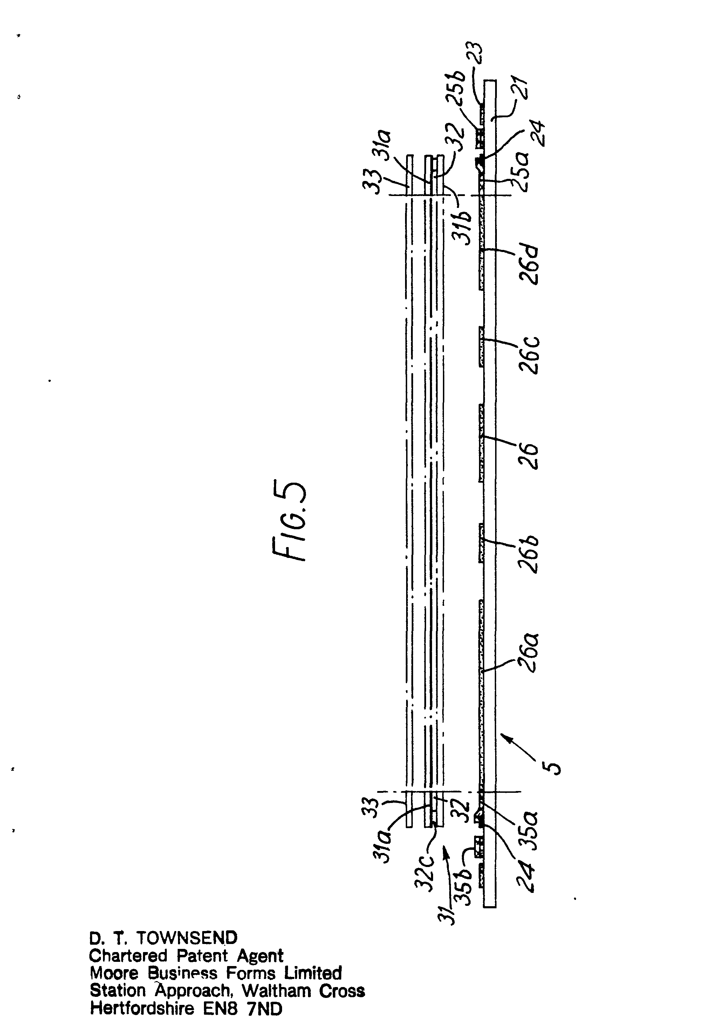

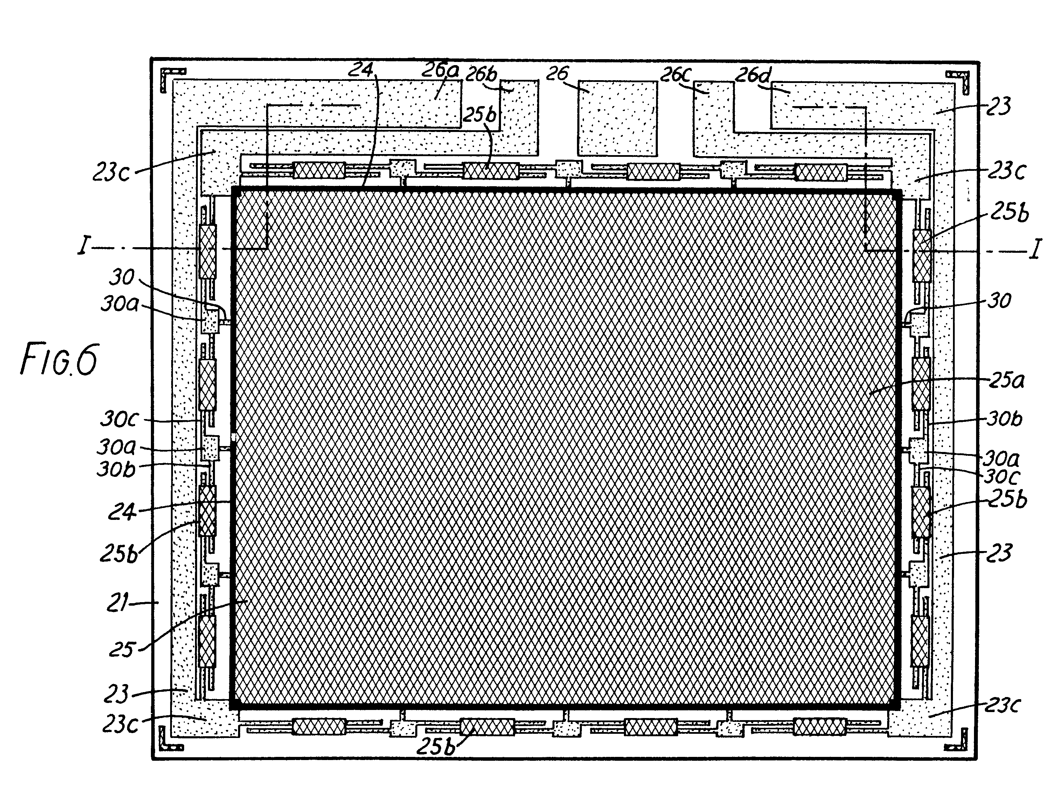

Referring to Figs 5 and 6 of the drawings there is shown a writing pad 5 including a rigid base board 21 of non-conducting material (such as that which is usually used as a base for printed circuit boards, for example the material known as fibreglass) which serves as the mechanical supporting part of the writing pad. A layer of conductive connector material 3 is printed on the base board 21. The material of the conductive connector layer is applied in the form of an etched copper layer similar to that used on printed circuit boards or may be applied as an ink which embodies silver particles to provide a coating having a resistance of about 0.01 ohms per square area (and hereinafter referred to as a low resistance). The conductive connector coatings serve to connect the medium resistance borders (to be hereinafter described) to printed connectors 26 at the top edge as shown in Fig 6 of the sheet 22 to an external circuit.

Printed on top of the low resistance conductive connector layer 23 is a medium resistance border layer 24 which extends completely around the periphery of the higher resistance coating layer 25 (to be hereinafter described) and overlies the innerpart of the conductive layer 23. The medium resistance border layer 24 overlaps the low resistance layer 23 at the corners thereof.

The medium resistance border layer has a width of between three hundreths and five hundreths of an inch (0.03" to 0.03") and may be printed from ink embodying a mixture of silver and carbon particles to give a resistance to the order of one ohm per square area. The medium resistance area is shown in black on Fig 6 of the drawings.

A higher resistance coating 25 is printed on the board shown in Fig 6 mainly within the border formed by the border layer 24 but partially overlies the border layer 4 as best shown in Fig 6 where it is shown in cross hatching. The main part of the high resistance coating layer 25 comprises a main rectangular part 25a lying within the border layer 24. The other part of the high resistance coating layer also shown in Fig 6 of the drawings in cross hatching comprises a plurality of tuning rectangular parts 25b arranged outside the border layer 4 and which serve to give to the coating layer 25 the property of linear drop in voltage when appropriately driven.

The coating which has a resistance of about 1000 ohms per square area may be printed from an ink having conducting material (preferably carbon/or silver) and a resin, a plasticizer and a solvent. This coating has a thickness of about 0.001".

In order to prevent the coating 5 from being scratched during transit or when being loaded into or unloaded from the character recognition apparatus the layer 5 may comprise a cover layer having a resistance of about 100,000 ohms per square. The coating is similar in constitution to the main coating 5 but contains a smaller proportion of conducting material and has a thickness of less than 0.001".

The low resistance conductive connector layer 23 comprises a series of connector areas arranged at the top edge of the writing pad as shown in Fig 6, to an external circuit.   As shown the connector areas 26 are positioned at the end of a conductive lead to a rectangular area 23c adjacent each corner of the high resistance area.   These connections are made from the connectors 26a, 26b, 26c, 26d to the rectangular corner areas 23c adjacent the respective four corners of the rectangular resistive parts 25a as best shown in Fig 6.   Additional areas of the conductive connector coatings 23 are provided in the form of a series of extension lines 30 (Fig 6) extending outwardly from one of the respective corner areas 23c and from beneath the medium resistance border layer 24.   These extension lines 30 like the remainder of the low resistance layer 23 are printed to form part of the low resistance layer 23 and are of the same material as that layer.    The extension lines 30 each consist of a rectangular part 30a with one line 30b extending from the rectangular part 30a in one direction and a second line 30c extending from the rectangular part 30c but in the opposite direction.    Each outer line 30c extends parallel to and outwardly of the line 30b extending from the next adjacent part 10a.    The extension lines 30a, 30c are overlaid by the tuning rectangular parts 25b which form part of the high resistance coating 25. Extension lines 30b, 30c are intended to be used to ensure that with the selective adjustments to the resistivity of the border areas 4 and the extension lines 30b, 30c serves to modify the resistivity of the resitive part 25a and thus the voltage gradient along the length of the pad is linear when connected in an electrical circuit.    This is achieved by removing material from the parts 25b which falls between the adjacent lines 30b, 30c parallel with one another or if appropriate removing part of a line 30b or 30c to place the tuning rectangular part 5b on open circuit.

The material of the layer 25 of which the rectangular parts 25b are formed is of a high resistance so the removal of a part of the material layer varies the resistance between the adjacent lines 30b, 30c and hence adjusts the effective resistance of the border line 24 to render the voltage gradient across the pad to be linear.

Each one of the resistive layer 25 and the border layer 24 are formed by screen printing on the sheet 22. The layers have a thickness of about 0.001" or even less.

Positioned above the resistive layer 25 and separate therefrom is an easily replaceable cushion layer positioned in the area where writing pressure is applied. This cushion layer 31 is intended to prevent an electrical circuit being made when the operators hand rests on the writing surface and consists of two leaf layers 31a, 31b of normally electrically insulating material and between which leaf layers there is provided a layer 32 of a dielectric non-conductive elastomeric gel material.

A suitable gel is that supplied by Dow Corning under the Trade Mark SYLGARD Q3-6527. This material is supplied in two parts and we find that a mixture of the two parts of Part A/Part B in the range of 1.65/1 to 1/1 is suitable. The gel layer has a thickness of between 0.005" to 0.0050" and preferably between 0.010" and 0.012".

The upper leaf layer 31a is a polymeric film coated or treated on the side adjacent the elastomeric gel material with conductive material of low electrical resistance typically less than 1,000 ohms per square.   This may comprise metallised film or a conductive ink coating on the film and preferably comprises a conductive ink which is screen printed onto the lower face of the flexible sheet 32.   The conductive material in this layer is connected by an integral electric connection through the conductive material in an electrical circuit to be hereinafter described, to voltage measuring means.

The said lower leaf 31b is a volume conductive film having a low electrical resistance through the film and a high electrical resistance across the film.   The ratio of through resistance to across resistance should be less than 1/100.   It is also required that the resistance through the film should be less  than 10,000 ohms per square and the resistance across the film should be greater than 50,000 ohms per square.   Such a material may be a filled polymeric film containing conductive material such as carbon such as sold under the Trade Mark Velostat by the 3M's Company or may consist of an elastomeric film such as silicone film containing finely dispersed nickel particles.

The upper leaf 31a and the lower leaf 31b are welded together as by heat sealing 32c at their margins to contain the elastomeric material between the sheets.   As shown a further protective flexible sheet 33 is provided over the conductive leaf layer 31 and may comprise a polyester film sheet having a thickness of the order of one thousandth of an inch (0.001").

An electrical connection is made between the layer 31a and an electrical circuit external of the writing pad. This connection is made through the area 6e adjacent the areas 26b, 26c an electrical connection is made from these respective areas 26a, 26b, 26c, 26d, 26e to electric circuits to be hereinafter described.

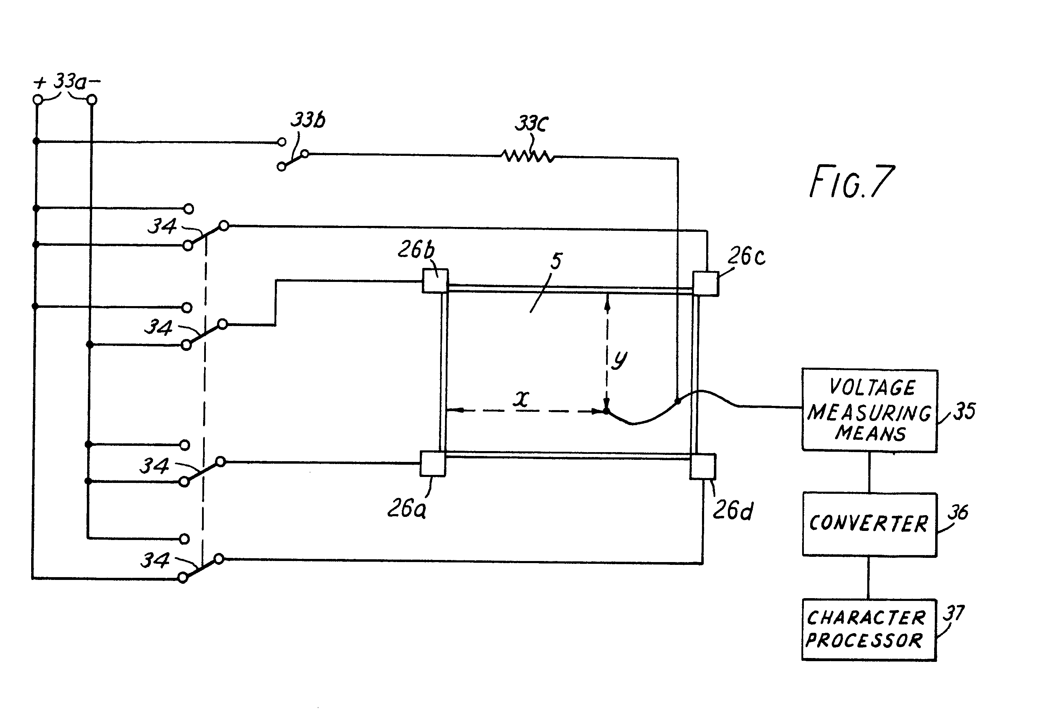

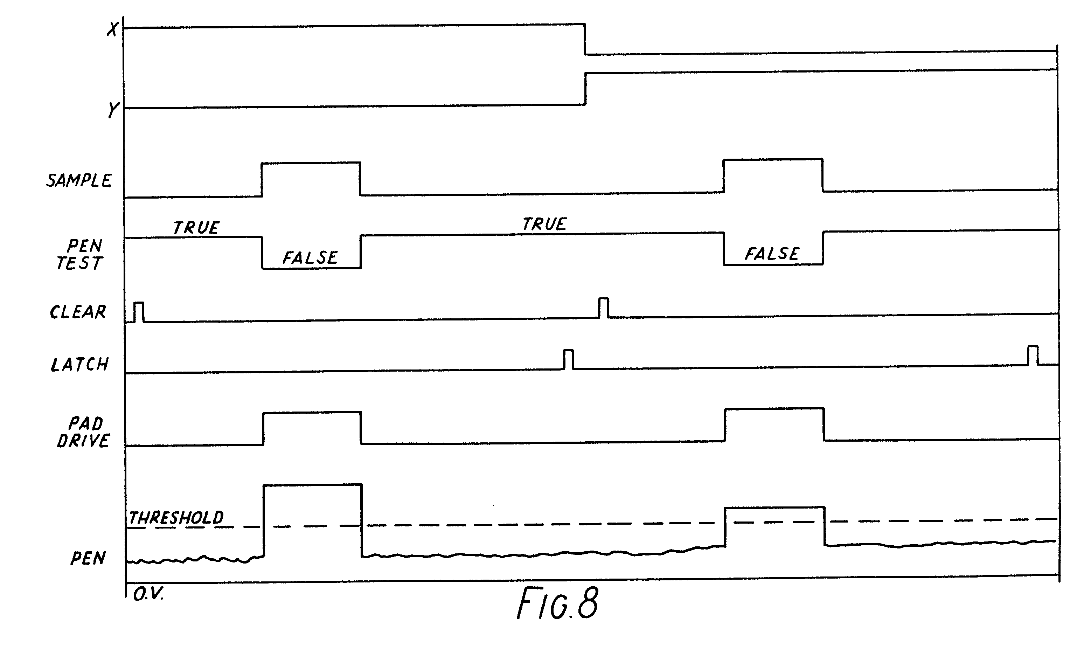

An electrical switching circuit as shown in Fig 7 is provided whereby an electrical voltage is connected alternately between the connectors 26a, 26b and the voltage measuring means on the one hand and the connectors 26c, 26d and the voltage measuring means on the other hand. By means of these connections current is caused to flow through the resistive layer first one direction and then through the resistive layer in another direction, preferably at right angles to the first direction. These signals are shown diagrammatically in Fig 8.

The writing pad so described constitutes a two-dimensional potentiometer by virtue of the alternate electrical connections between the connectors 26b, 26c on the one hand and 26a, 26d on the other hand to make one electrical connection and also between the connectors 26b, 26a on the one hand and 26c, 26d on the other hand to provide alternately generated voltages across the writing pad so that when an electric connection is made between the layer 31a and the main coating layer 25a, a voltage is applied to the layer 25a representative of the co-ordinates of the point of contact between the sheets 23 and 31.

Referring to the circuit diagrams shown on Fig 7 there is shown a writing pad similar to the pad shown in Fig 1.  An electric DC voltage supply is connected to the positive and negative terminals 23a and the terminals are connected to switches 34 and thence to the connector leads 26b, 26c, 26a and 26d.   The switches are ganged together so the switches operate together and the switches are arranged so that the connector 26c is always connected to the positive supply and the connector 26a is always connected to the negative supply.   Connectors 26b, 26d are alternately connected to the minus and the plus supply respectively in the switch down condition wherein the x co-ordinate is measured thence to the plus and minus respectively in the switch down condition wherein the x co-ordinate is measured thence to the plus and minus respectively in the switch up condition, wherein the y co-ordinate is measured.

A connection is made from the conducting layer on the leaf layer
31a to a voltage measuring means 35.   This voltage measuring
means is adapted to read the voltage applied across the resistive layer
of the writing pad which is representative of a co-ordinate of
a point x, y which is representative of the writing position.
Thus, if a writing implement is recording a message on the
writing pad at any one time the position of the writing implement
maybe represented by two voltages.

The voltage measuring means 35 is connected to an A/D converter
36 and character processor 37 arranged to recognise characters
in accordance with the changes in the voltages corresponding to
the distances x and y hereinbefore referred to.

Although we have shown the ganged switches 34 as being of  the
mechanical kind these switches can be electronic switches.

A connection is also made from the positive line 33a through
a switch 33b which is open during the pen test "false" time period
(that is the time when the signal (to be hereinafter described) is
in the high state of Fig 8) and closed during the pen test "true"
time period.   The connection is made from the switch 33b
through a resistor 33c (typically of 33,000 ohms resistance)
to the connection between the leaf layer 31a to the voltage
measuring means 35.   It is also arranged that during the pen test true period all the connections from the writing pad to the switch 34 are connected to the negative terminal of the supply line 33a. By this means we are able to determine whether the pen is in the down (or writing position) or in the up (or out of contact with the pad position).

In order that the location of the area on which handwriting is being recorded may be evaluated the circuits and signals illustrated in Figs 8, 9 and 10 are employed.

Referring first to Fig 8 there is shown a plurality of signals as follows:

x         a signal applied to the writing pad.
          and the other circuits when the value of
          the x axis reading is being effected.

y         a signal (the complement of the x signal)
          applied to the writing pad and other
          circuits when the value of the y axis
          reading is being effected.

Pen       an analog signal being the voltage on the
          upper conductive layer of the pad.

Sample      a digital signal effective to control the time
at which a sample of the pen signal is taken
thereby measuring an x or y co-ordinate.

Pen test     a digital signal to determine the time at
which the pen signal is tested to determine
the up/down status of the pen.

Clear       an initiating pulse

Latch       a terminating pulse.

Pad driver   a digital signal applied to the pad to effect
readings of the x and the y values of the
position of the pen on the pad.

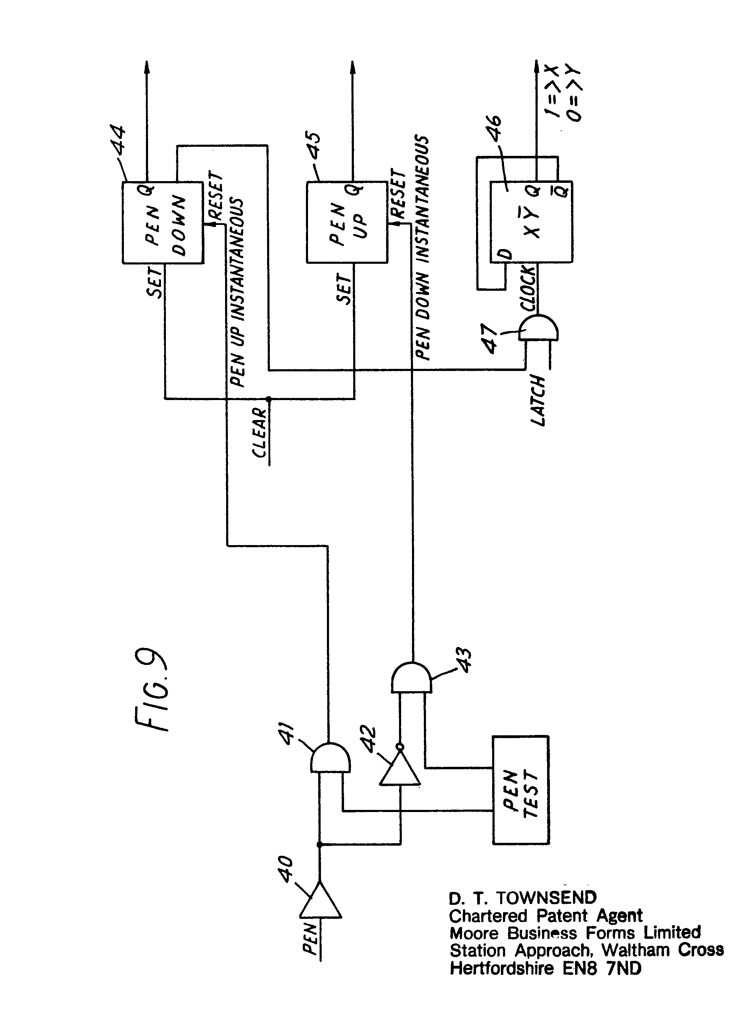

Referring to Fig 9 of the drawings there is shown a circuit
diagram having a Schmitt trigger 40 into which is passed a
"pen" signal. The Schmitt trigger 40 is conditioned to
generate a positive signal if a signal greater than a threshold
signal is applied to it and to pass a zero signal if a signal
less than a threshold signal is applied to it. Thus the signal
of the voltage generated by the application of a pen to the
writing pad 5 is shown at the pen signal in Fig 8. This signal is applied to a gate to which is also applied the pen test signal also shown in Fig 8 so that the pen signal is tested during the time the pen test signal is positive. If the pen signal exceeds a threshold value during the time the pen test signal is positive a positive signal is generated on th pen up (i.e. the pen is not in the down position), whereas if the signal does not exceed the threshold value the pen down signal is generated. Thus the output from the Schmitt trigger is applied directly to a first 'and' gate 41. The output is also applied through an inverter 42 to a second 'and' gate 43. The 'pen test' signal is also applied to the 'and' gates 41, 43 to produce a pen up instantaneous signal to the reset input of a pen down flip flop circuit 44 and a pen down instantaneous signal to a pen up flip flop circuit 45.

The pen up and pen down flip flop circuits are preset to the true state by receipt of the clear signal at the start of the cycle. If during the test portion of the cycle, that is when the pen test signal is not at the true condition, the pen at any instant is lifted from the writing pad then the pen down flip flop circuit is reset to the false condition. Thus if the pen was not truly on the writing position on the pad for the entire test period the pen down flip flop is reset.

The pen up flip flop circuit operates in a reverse manner.

A signal is also applied from the output of the pen down circuit 44 to the $x\ddot{y}$ flip flop circuit 46 through a gate 47 to which the latch signal is also applied.    The output from the $x\bar{y}$ circuit is arranged to be positive only when an x axis signal is being generated.

The generation of a $\bar{Q}$ signal output from the $x\bar{y}$ flip flop circuit 46 is passed to the D input of the flip flop circuit 46 and this causes the flip flop circuit to change state whenever a pulse occurs on the clock latch input.    The gate 47 on the input to the clock input passes the latch signal (which will change the $x\bar{y}$ status) only if the pen down signal was true at the end of the cycle (that is the cycle just completed was a true one). The circuits now change to measure the other co-ordinate.    If the pen down signal is not valid there is no change of state but the cycle is repeated until the pen down flip flop circuit is changed to the true condition when valid readings of the co-ordinates are made.

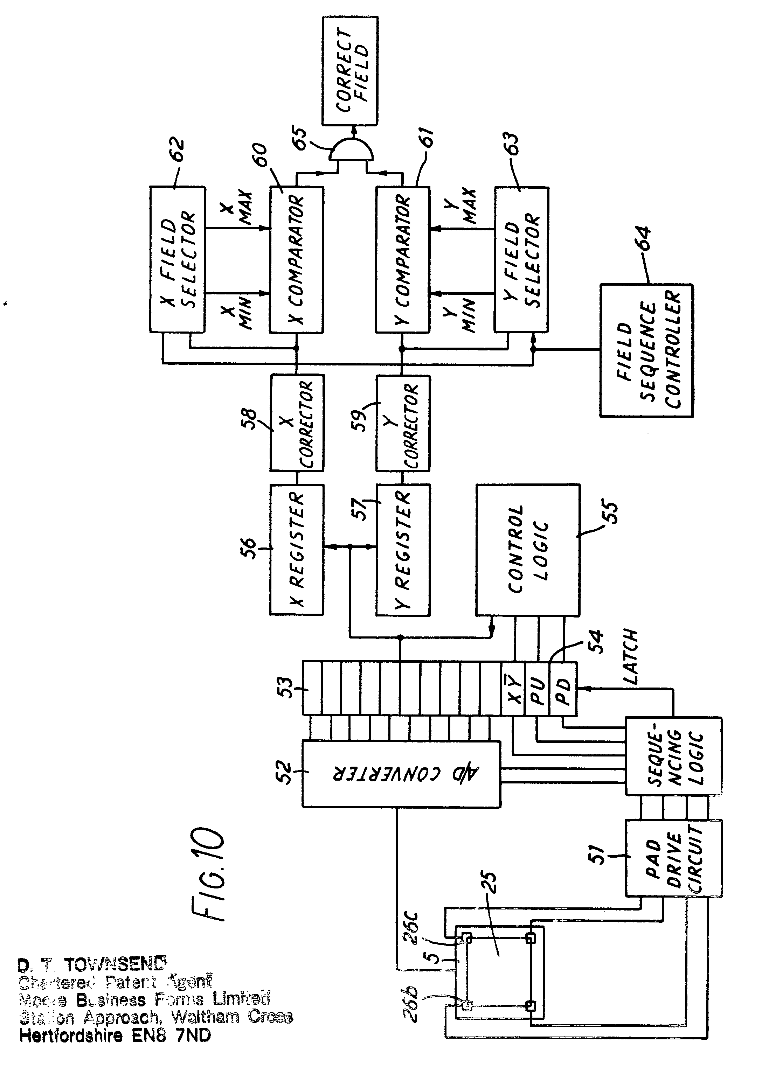

Referring to Fig 10 of the drawings there is shown a writing pad 5 (shown more fully in Fig 6 of the drawings) to which voltages are supplied by a pad drive circuit 51, to the corner areas 23c of the high resistance coating 25.   The output from the resistance layer 25 is passed to an A/D converter 52.   The voltage is derived from the position of the writing pad higher resistance coating 25a through the cushion layer 31 which contacts the coating 25a at the position at which the writing implement is applied to the business form.   The voltage comprises two alternate parts representing the x co-ordinate and the y co-ordinate of the writing implement and represents the voltage representative of the location of the writing implement on the pad (indicated diagrammatically by the position xy on Fig 4) into a digital number corresponding to that voltage. The number representative of a co-ordinate location or a writing pen is therefore represented by a number in the register with reference to the x axis and the y axis respectively.   The representative numbers are entered into a series of flip flops circuits forming a register 53.    Ten flip flops circuits are required to provide co-ordinate numbers up to 1,000 and are derived from the total of numbers which may be stored in 10 registers that is $2^{10}$ (1024). Associated with the register 53 are a further series of registers 54 into which are stored pulses representing the $\overline{xy}$ signal and the pen up and pen down signals. The signals representing $\overline{xy}$, pen up and pen down are fed to the Control Logic circuit 55 and signals representing x axis and y axis co-ordinate locations of the writing pad are fed to an x register 56 and a y register 57 under the control of the pulse $\overline{xy}$ obtained from the control logic circuit 55 so that the position of a writing pen with respect to the business form is stored in these registers 56, 57.

The x and y registers are connected through respective x corrector 58 and y corrector 59 circuits (to be hereinafter described) to a respective x comparator circuit 60 and a y comparator circuit 61.    An x field selector 62 is connected to the x comparator circuit 60 and a y field selector 63 is connected to the y comparator circuit 61. The field selector circuits 62 and 63 are operative under the control of the field sequence controller 64 to supply to the

0032619

comparator circuits 60, 61, a series of signals representative of the location of a printing area on the business form.    Thus if for example an operator is writing on the business form details of a customers name in the area 13 on the business form which lies in the x co-ordinates between 20 and 750 and in the y co-ordinates between 800 and 850 the signal representative of co-ordinates lying between 20 and 750 for the x co-ordinate and lying between 800 and 850 for the y co-ordinate will be passed through the respective x register 56 and y register 57 to the x comparator 50 and the y comparator 61.    Under the control of the field sequence controller 64 a series of signals are applied through the x field selector circuit 62 and the y field selector circuit 63 to the x comparator 60 and the y comparator 61.    These signals include a x min and a x max signal and a y min and a y max signal representaive of an area on the business form.

In the case of the customers name area  a x min signal of 20 and a x max signal of 750 is passed to the comparator and a y min signal of 800 and a y max signal of 800 is passed to the y comparator.    If the signal received on the comparator circuits comes within the range specified by the field selector circuits 62, 63 an appropriate acceptance signal is applied to the gate 65 and if both signals are applied the gate 65 is opened to indicate the correct field to the correct field circuit 66.    The information about the correct field can be utilised for further processing.    For example it is used to process the handwriting data being recognised in the character recognition apparatus.

In Fig 3 of the drawings there is shown a graduation mark 17. Prior to processing of information in the character recognition apparatus the operator of the apparatus applies his handwriting implement to the intersection of the two lines on the graduation mark.    An electrical connection is made between the coating 25a and the cushion layer 31 representative of the position of the graduation mark with respect to the coating 25a.   Thus the graduation mark may be represented by the x co-ordinate as 10 and the y co-ordinate as 15.    If the business form is not very accurately located with respect to the coating 25a on the writing pad a signal representative of a co-ordinate close to the x, y, co-ordinate 10, 15 may be generated. This generated signal is passed to a comparator circuit and a further signal is generated signifying the difference between the generated signal and the true xy co-ordinate position of the graduation mark 17 is then entered into the x corrector and the y corrector circuits 58, 59 to apply a correcting signal to the location signals passed from the x register 56 to the x comparator 60 and from the y register 57 to the y comparator 61 each time the handwriting locating signals are processed.

The handwriting recognition apparatus is arranged to recognise characters and to process these. For example the business form has the area 15 to receive details of a sales transaction. These areas are sub divided into an area 15b to receive details of the article, an area 15c to receive details of the number of articles being sold and an area 15d to receive details of the unit price of such articles. The area 15e represents an area which serves as an instruction area to effect a multiplication operation (number of articles multiplied by unit price) which multiplication operation may be effected automatically within the apparatus.

The characters recognised by the handwriting recognition apparatus and the results of the calculations effected by the apparatus are displayed on the display 4. Similarly instructions to the operator as to what action is to be next taken by the operator are also displayed on the display. Also the information may be collated and passed, for example to a computer for processing so that the character recognition device may serve as a computer entry facility.

The areas 14, 15, 16, 17 on the business form to receive numbers or letters, may like the graduation mark 17 be arranged to receive marks applied by writing pressure of a writing pen or other implement. Thus the area 15a as shown on Fig 3 refers to Total Goods, Total V.A.T. and Total Due. These items are made operational by writing pressure on the centre dot of the transverse row of three dots and the effect of writing pressure is also to make electrical contact between the higher resistance coating layer 25 and the layer 31. The position of the electrical contact between the layers is evaluated by the x comparator 60 and y comparator 61 to determine the operation to be effected which is attained by passing the appropriate signal through the correct field circuit to the appropriate control. Similar considerations apply to the control areas constructed by the series of three dots in the area 15a.

In operation of the apparatus the business forms web is located in the apparatus with the feed apertures in the business form web located on the feed pins 6a.  The operator places his writing pen on the graduation mark 17 at the intersection of the two lines.  This writing operation serves to confirm the writing position of the mark on the business form relative to the writing pad 5 and if there is non registration a correcting signal corresponding the misalignment in the x axis and in the y axis is passed to the x corrector and y corrector circuits 58, 59. The writing operation at the graduation mark 17 also serves to initiate the recording and recognition features of the character recognition apparatus and instructions are displayed on the display 14 about entering information for example information about the customers name at area 14.  The customers name is then written in block capitals and by virtue of writing within the area 14 a signal about the location of the area being for example within the area defined by the x axis 20 - 750 and y axis 800 - 850 the x comparator circuit 60 and the y comparator circuit 61 are able to recognise the letters being entered as being a customers name and the numbers being entered as being the customers account number.  This information is then passed to the correct field circuit for further processing for example by computer .

— 32 —

Although the operation of the apparatus has been described in relation to applying handwriting to a continuous stationery business form web the apparatus may receive other business forms, for example a cut set with suitable means, for example a pair of apertures formed in the cut set, for locating the cut set. It is also envisaged that a single sheet business form may be located in the apertures but being moved up against a pair of stops to locate the sheet in the x axis and y axis positions. In this case the position of copies is arranged by making a record of the transaction by recognising the characters by the apparatus and recording these.

CLAIMS

1. A business form for use in character recognition apparatus to receive and to recognise hand writing data comprising at least one form length of a business form, the business form having location means in the form length to enable the form to be fed within the apparatus and halted at a predetermined location in the apparatus co-ordinate graduation printing areas to define location to receive respective predetermined items of data made up of handwritten characters the position of the graduation printing areas representing different kinds of data and having a predetermined co-ordinate relationship with reference to the location means to ensure that the printing areas are located in the required relationship with reference to the co-ordinate recognising apparatus in the handwriting recognition apparatus whereby when handwriting is applied to a graduation printing area on a form length it may be recognised and by virtue of the position of the area the handwriting data may be processed.

2. A business form according to claim 1 having a graduation mark to accept a handwriting contact signal from a handwriting implement, the graduation mark being associated with a co-ordinate position recognising apparatus to define the position
of the graduation mark with respect to a location area in the
handwriting apparatus and to apply a correcting signal to the
co-ordinate recognising apparatus each time the handwriting data
is processed.

3. A business form according to claim 1 or 2 wherein the
graduation printing areas include an area to represent a
calculating operation.

4. A business form according to claim 1 or 2 wherein the
graduation printing areas include an area to identify the name
and address of a person to whom the form is related.

5. A business form according to claim 1 or 2 wherein the
graduation printing areas include an area to identify an
instruction to the handwriting character recognition apparatus.

6. A handwriting data processing system comprising apparatus
to receive and recognise handwriting data and a business forms
stationery for use with such apparatus wherein the business form
has location means to locate the form with reference to the
apparatus and co-ordinate graduation areas to define locations representative of predetermined data and to receive items of data made up of handwritten characters and wherein the apparatus to receive and to recognise handwriting has a location mechanism to co-operate with the location means on the business form to locate the business form in the apparatus and has a mechanism to co-operate with the co-ordinate graduation areas on the business form by virtue of the selected co-ordinate graduation areas of the business form to recognise the co-ordinate graduation printing area and by virtue of the position of the area to process the handwriting data.

7.   A handwriting data processing system according to claim 6 wherein one of the co-ordinate graduation areas on the business form comprises a graduation mark which co-operates with a co-ordinate position recognising location being a part of the location mechanism to accept a locating handwriting contact signal, means to check a variation from the position recognising location and to apply a correcting signal to co-ordinate recognising apparatus each time the handwriting data is processed.

8.   A business form constructed and arranged substantially as herein described with reference to the accompanying drawings.

0032619

9. A handwriting data processing system substantially as herein described with reference to the accompanying drawings.

4

6c

*FIG.1*

1

*FIG.2*

1

5

3

6c

6a

2

3

6b

# FIG.3

D. T. TOWNSEND
Chartered Patent Agent
Moore Business Forms Limited
Station Approach, Waltham Cross
Hertfordshire EN8 7ND.

FIG.4

CUSTOMERS NAME | ACCOUNT N°
ADDRESS | DATE

STOCK N°.

TOTAL GOODS
TOTAL VAT
TOTAL DUE

DAYS TOTAL

ACCEPT   CANCEL   CASSETTE   TRANS

GOODS   VAT   TOTAL

D. T. TOWNSEND
Chartered Patent Agent
Moore Business Forms Limited
Station Approach, Waltham Cross
Hertfordshire EN8 7ND

FIG.5

D. T. TOWNSEND
Chartered Patent Agent
Moore Business Forms Limited
Station Approach, Waltham Cross
Hertfordshire EN8 7ND

FIG.6

FIG.7

FIG.8

0032619

FIG.9

SET | PEN DOWN | Q — 44

RESET

PEN UP INSTANTANEOUS

CLEAR

PEN — 40

41

SET | PEN UP | Q — 45

RESET

42

43

PEN DOWN INSTANTANEOUS

PEN TEST

47

LATCH

CLOCK | D | X Ȳ | Q — 46

Q̄

1 => X
0 => Y

D. T. TOWNSEND
Chartered Patent Agent
Moore Business Forms Limited
Station Approach, Waltham Cross
Hertfordshire EN8 7ND

Moore Business Forms Inc

9 Sheets
Sheet 9 of 9

D T TOWNSEND
Chartered Patent Agent
Moore Business Forms Limited
Station Approach, Waltham Cross
Hertfordshire EN8 7ND

FIG.10